# DEMANDE DE BREVET EUROPEEN

(11) **EP 3 024 197 A1**
(43) Date de publication de la demande: **25.05.2016**
(21) Numéro de dépôt: 15306818.4
(22) Date de dépôt: 17.11.2015
(51) Int. Cl.: H04L 29/06, G06K 9/00, G06K 19/073, H04W 12/06, G06F 21/34

(54) **PROCEDE DE PRISE DE DONNEES BIOMETRIQUES**

(30) Priorité: 18.11.2014 FR 1461144
(71) Demandeur: OBERTHUR TECHNOLOGIES, 92700 Colombes (FR)
(72) Inventeur: BERTIN, Marc, 92700 Colombes (FR)
(74) Mandataire: Orsini, Fabienne

(57) **Abrégé**

L'invention concerne un procédé de prise de données biométriques par un module sécurisé portable (10) présentant un capteur de données biométriques (14), comprenant les étapes suivantes :
- génération, par une interface homme-machine (21) d'un appareil électronique (20), d'une indication destinée à un utilisateur ;
- échange, via une interface de communication sans fil (11, 12, 24, 27) entre l'appareil électronique (20) et le module sécurisé portable (10), d'informations relatives à l'initiation d'un processus de prise de données biométriques ;
- détermination de données biométriques de l'utilisateur au moyen du capteur (14) ;
- mémorisation des données biométriques déterminées dans le module sécurisé portable (10).

## Description

### DOMAINE TECHNIQUE AUQUEL SE RAPPORTE L'INVENTION

La présente invention concerne les modules sécurisés portables munis d'un capteur de données biométriques, par exemple un capteur d'empreinte digitale.

Elle concerne plus particulièrement un procédé de prise de données biométriques par un tel module sécurisé portable.

L'invention s'applique particulièrement avantageusement dans le cas où le module sécurisé portable est de dimensions réduites (par exemple avec sa plus grande dimension inférieure à 12 cm) et/ou ne présente aucun indicateur ou afficheur.

### ARRIERE-PLAN TECHNOLOGIQUE

On connaît par exemple du document WO 2004/025 545 un module sécurisé portable qui mémorise des données biométriques et comprend un capteur d'empreinte digitale conçu pour mesurer des données biométriques courantes.

Lorsque les données biométriques courantes mesurées par le capteur d'empreinte digitale correspondent aux données biométriques mémorisées, le module sécurisé portable émet une autorisation, par exemple de communication sur un réseau ou d'accès physique à une zone sécurisée.

La solution proposée dans ce document impose toutefois au porteur de la carte de se rendre dans un bureau d'émission du module sécurisé portable où peut être effectuée la prise d'empreinte (en anglais "*enrollment*") nécessaire à la mémorisation des données biométriques du porteur dans le module sécurisé portable.

### OBJET DE L'INVENTION

Dans ce contexte, la présente invention propose un procédé de prise de données biométriques par un module sécurisé portable présentant un capteur de données biométriques, comprenant les étapes suivantes :
- génération, par une interface homme-machine d'un appareil électronique, d'une indication destinée à un utilisateur ;
- échange, via une interface de communication sans fil entre l'appareil électronique et le module sécurisé portable, d'informations relatives à l'initiation d'un processus de prise de données biométriques ;

- détermination de données biométriques de l'utilisateur au moyen du capteur ;
- mémorisation des données biométriques déterminées dans le module sécurisé portable.

Ainsi, l'appareil électronique est informé de l'initiation, par le module sécurisé portable, de la prise de données biométriques réalisée au moyen des étapes de détermination et de mémorisation et peut la signaler à l'utilisateur au moyen de l'indication générée par l'interface homme-machine de l'appareil électronique.

L'indication incite par exemple à l'utilisateur à présenter la partie concernée de son corps (par exemple le doigt dans le cas d'une prise d'empreinte digitale) devant le capteur ; les étapes de détermination et de mémorisation peuvent alors être lancées (immédiatement) suite à l'échange d'informations afin de capturer les données biométriques de l'utilisateur.

Selon des caractéristiques optionnelles, et donc non limitatives :
- l'étape d'échange comprend une étape de transmission, via l'interface de communication sans fil, d'une commande d'acquisition émise par l'appareil électronique et destinée au module sécurisé portable ;
- la mise en oeuvre de l'étape de détermination ou de l'étape de mémorisation est conditionnée par la réception d'une donnée d'authentification par le module sécurisé portable, via l'interface de communication sans fil et en provenance de l'appareil électronique, ce qui permet de réserver le processus de prise d'empreinte à un utilisateur autorisé ;
- le procédé comprend une étape préalable de réception de la donnée d'authentification par l'appareil électronique en provenance d'un serveur distant ;
- une application exécutable au sein de l'appareil électronique pour mettre en oeuvre les étapes de génération de l'indication et d'échange via l'interface de communication sans fil est reçue du serveur distant ;
- l'appareil électronique comprend un module de communication dans un réseau de téléphone mobile ;
- une connexion de l'appareil électronique au serveur distant est établie au moyen dudit module de communication ;
- le procédé comprend, antérieurement à l'étape de réception de la

donnée d'authentification par l'appareil électronique, une étape d'authentification auprès du serveur distant mise en oeuvre par l'appareil électronique.
- l'interface homme-machine comprend un écran ;
- l'indication destinée à l'utilisateur est affichée sur l'écran ;
- le capteur de données biométriques est un capteur d'empreinte digitale ;
- les données biométriques sont des caractéristiques représentatives d'une empreinte digitale ;
- l'interface de communication sans fil est une interface de communication sans fil courte portée et a par exemple une portée inférieure à 50 cm ;
- l'étape de mémorisation est effectuée dans une mémoire non-volatile réinscriptible du module sécurisé portable.

Le procédé peut comprendre en outre les étapes ultérieures suivantes :
- obtention de nouvelles données biométriques au moyen du capteur ;
- comparaison des données biométriques obtenues et des données biométriques mémorisées.

Le procédé peut alors inclure une étape de mise en oeuvre, par le module sécurisé portable, d'un algorithme cryptographique utilisant une clé mémorisée dans le module sécurisé portable lorsque l'étape de comparaison a un résultat positif, par exemple lorsqu'un nombre prédéterminé de caractéristiques coïncident à l'étape de comparaison.

Le procédé peut également inclure une étape de lecture de données mémorisées dans le module sécurisé portable lorsque l'étape de comparaison a un résultat positif, par exemple lorsqu'un nombre prédéterminé de caractéristiques coïncident à l'étape de comparaison.

L'appareil électronique est par exemple un téléphone mobile ; le module sécurisé portable est par exemple une carte à microcircuit.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un système dans lequel est mise en oeuvre l'invention ;
- la figure 2 représente les étapes principales d'un exemple de procédé conforme à l'invention.

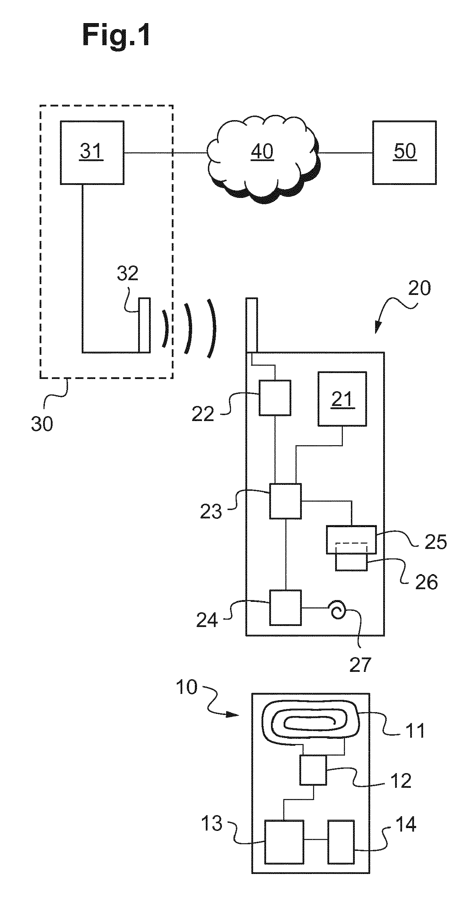

La figure 1 représente schématiquement les éléments principaux d'un système dans lequel peut être mise en oeuvre l'invention.

Ce système comprend un module sécurisé portable (ici une carte à microcircuit 10), un appareil électronique (ici un téléphone cellulaire ou téléphone mobile 20), un réseau de téléphonie mobile 30, un réseau informatique 40 (ici le réseau Internet) et un serveur distant 50.

La carte à microcircuit 10 comprend un microcontrôleur 13 auquel sont reliés un circuit d'interface radio courte portée 12 et un capteur d'empreinte digitale 14. En variante, on pourrait utiliser un capteur d'un autre type de données biométriques, par exemple un capteur d'image en vue d'une reconnaissance faciale ou d'une reconnaissance d'iris. La carte à microcircuit 10 porte également une antenne 11 connectée au circuit d'interface 12.

Le circuit d'interface 12 et l'antenne 11 forment un module de communication sans fil courte portée, conçu pour permettre un échange de données avec un dispositif extérieur, par exemple selon la norme ISO14443 ou selon le protocole NFC (pour "*Near Field Communication"*).

Le microcontrôleur 13 comprend un processeur (ici un microprocesseur), une mémoire vive et une mémoire non-volatile réinscriptible (par exemple de type EEPROM pour "*Electrically Erasable and Programmable Read-Only Memory*").

Le téléphone mobile 20 comprend un processeur 23 (équipé notamment d'au moins une mémoire, par exemple d'une mémoire vive et/ou d'une mémoire non-volatile réinscriptible), une interface homme-machine (ici un écran tactile 21), un module de communication 22 pour réseau de téléphonie mobile, un circuit d'interface radio courte portée 24 et un lecteur de carte 25. Le téléphone mobile 20 est alimenté par une batterie rechargeable (non représentée).

Les différents composants du téléphone mobile 20 sont reliés entre eux de manière à coopérer au fonctionnement du téléphone mobile 20. Dans l'exemple représenté en figure 1, l'écran tactile 21, le module de communication 22, le circuit d'interface 24 et le lecteur de carte 25 sont chacun reliés au processeur 23 qui supervise le fonctionnement du téléphone mobile 20. En variante, les composants pourraient être connectés sur un bus commun.

Le lecteur de carte 25 reçoit (ici de manière amovible) une carte à microcircuit 26, par exemple de type UICC (pour "*Universal Integrated Circuit Card")* mémorisant des justificatifs (en anglais "*credentials*") associés à un abonnement et permettant l'accès de l'appareil électronique (ici le téléphone mobile 20) portant cette carte à microcircuit 26 au réseau de téléphonie mobile 30. Ces justificatifs incluent par exemple une clé cryptographique nécessaire à l'établissement d'une communication entre le réseau de téléphonie mobile 30 et l'appareil électronique (qui constitue alors un terminal dans le réseau de téléphonie mobile 30).

En variante, les justificatifs d'abonnement pourraient être mémorisés dans un circuit électronique sécurisé d'un autre type, tel qu'un circuit intégré attaché (par exemple soudé) à l'appareil électronique 20, par exemple dans un élément sécurisé intégré (ou eSE pour *"embedded Secure Element*").

Selon une autre variante, on pourrait utiliser, en lieu et place de l'ensemble formé par le lecteur de carte 25 et la carte à microcircuit 26, un environnement d'exécution de confiance ou TEE (pour "*Trusted Execution Environment*"), obtenu du fait de l'exécution par le processeur 23 d'un système d'exploitation de confiance.

Le circuit d'interface 24 est connecté à une antenne 27 de manière à former un module de communication sans fil courte portée, conçu pour permettre un échange de données avec un dispositif extérieur selon un protocole du même type que celui utilisé par le module de communication sans fil courte portée de la carte à microcircuit 10, formé par le circuit d'interface 12 et l'antenne 11.

On prévoit par exemple ici que le circuit d'interface 24 du téléphone mobile 20 fonctionne en mode lecteur et télé-alimente ainsi la carte à microcircuit 10. En variante, la carte à microcircuit pourrait comporter une batterie pour son alimentation.

Le module de communication sans fil courte portée formé du circuit d'interface 24 et de l'antenne 27 a typiquement une portée inférieure à 0,5 m.

Ainsi, lorsque la carte à microcircuit 10 et le téléphone mobile 20 sont suffisamment proches (en pratique à une distance l'un de l'autre inférieure à la portée susmentionnée), une communication sans fil courte portée s'établit entre le circuit d'interface 12 de la carte à microcircuit 10 et le circuit d'interface 24 du téléphone mobile 20, et le microcontrôleur 13 de la carte à microcircuit 10 peut ainsi échanger des informations avec le processeur 23 du téléphone mobile 20 via la liaison sans fil ainsi établie, comme expliqué ci-après.

L'interface homme-machine 21 (ici réalisée sous forme d'un écran tactile) permet l'affichage d'informations destinées à l'utilisateur du téléphone mobile 20 et la saisie d'instructions ou de données par l'utilisateur (ici du fait de la détection d'un doigt de l'utilisateur sur une zone donnée de l'écran tactile 21, correspondant par exemple à une touche d'un clavier virtuel). En variante, l'interface homme-machine pourrait par exemple être réalisée par un écran et un clavier distinct de l'écran.

Le module de communication 22 est conçu pour établir une liaison radio avec une station de base 32 du réseau de téléphonie mobile 30, ce qui permet de mettre en place un échange de données entre le téléphone mobile 20 (en pratique par exemple son processeur 23 relié au module de communication 22) et une passerelle 31 reliée à la station de base 32 dans le réseau de téléphonie mobile 30.

Comme déjà indiqué, la poursuite de l'échange de données entre la passerelle 31 et le téléphone mobile 20 est conditionnée à la présence de justificatifs d'abonnement au sein du téléphone mobile 20 (ici au sein de la carte à microcircuit 26 reçue de manière amovible dans le lecteur 25).

Comme représenté en figure 1, la passerelle 31 est reliée au réseau informatique 40 et ainsi au serveur 50 connecté à ce réseau informatique 40.

Le téléphone mobile 20 (en pratique son processeur 23) peut ainsi mettre en place un canal de communication, éventuellement sécurisé, avec le serveur 50 et échanger des données avec le serveur 50, en particulier comme proposé ci-dessous.

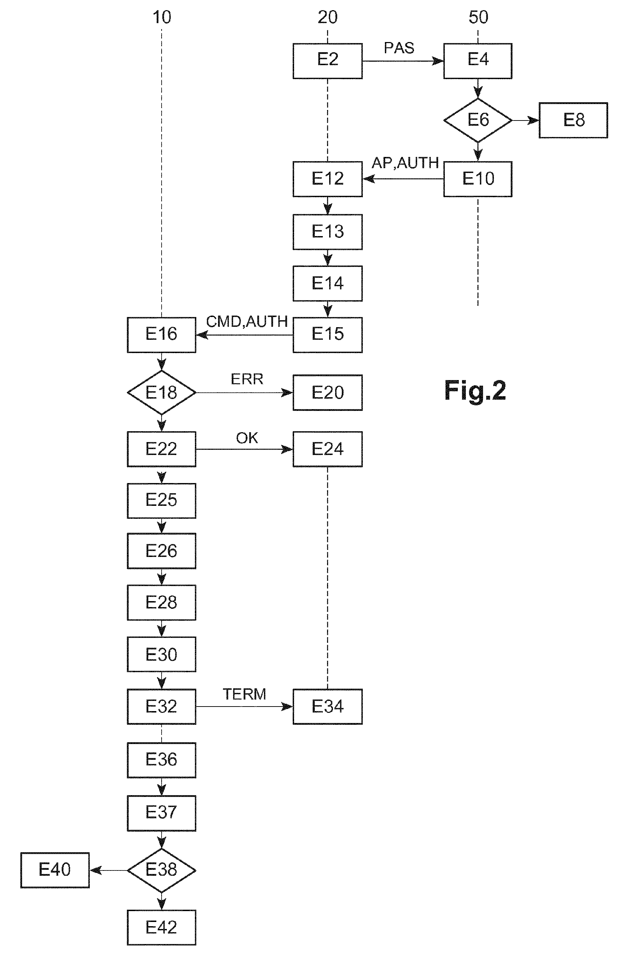

La figure 2 représente les étapes principales d'un exemple de procédé conforme à l'invention.

Ce procédé débute à l'étape E2 par l'émission d'un mot de passe PAS du téléphone mobile 20 au serveur 50, par exemple en association avec un identifiant de l'utilisateur. Cet envoi est par exemple réalisé dans le contexte décrit ci-dessus via le module de communication 22, le réseau de téléphonie mobile 30 et le réseau informatique 40. Le mot de passe (ainsi que, le cas échéant, l'identifiant de l'utilisateur) est par exemple saisi par l'utilisateur au moyen de l'écran tactile 21, typiquement dans un formulaire prévu à cet effet dans une page Web disponible sur le serveur 50.

Le serveur 50 reçoit le mot de passe PAS à l'étape E4 (et éventuellement l'identifiant) et détermine à l'étape E6 si ce mot de passe est correct, par exemple par lecture du mot de passe associé à l'utilisateur (ou, le cas échéant, à l'identifiant reçu) dans une base de données mémorisée au sein du serveur 50 et par comparaison du mot de passe lu au mot de passe reçu.

Si le mot de passe est correct, l'utilisateur est authentifié et le procédé se poursuit à l'étape E10 décrite plus bas.

Si le mot de passe est incorrect, le procédé continue à l'étape E8 pour le traitement de cette anomalie. Ce traitement peut consister à envoyer un message d'erreur au téléphone mobile 20 (ce dernier pouvant alors proposer à l'utilisateur une nouvelle tentative de saisie du mot de passe) ou à mettre fin à l'échange de données avec l'appareil électronique 20.

En variante des étapes E2 à E6, le téléphone mobile 20 ou son utilisateur pourrait s'authentifier auprès du serveur 50 par d'autres moyens d'authentification, par exemple en utilisant des données mémorisées dans le circuit électronique sécurisé mémorisant les justificatifs d'abonnement (carte à microcircuit 26 dans le mode de réalisation de la figure 1).

Lorsque l'utilisateur ou le téléphone mobile 20 est authentifié, le procédé se poursuit à l'étape E10 à laquelle le serveur 50 émet une application AP et une donnée d'authentification AUTH.

Selon une variante envisageable, la donnée d'authentification AUTH (et éventuellement l'application AP) est (sont) transmise(s) annexée(s) à un message électronique disponible pour le téléphone mobile 20 par accès à un compte de messagerie électronique (cet accès nécessitant une authentification du téléphone mobile 20 ou de l'utilisateur, authentification qui peut remplacer les étapes E2 à E6 décrites ci-dessus).

L'application AP et la donnée d'authentification AUTH sont reçues par le téléphone mobile 20 et mémorisées dans la mémoire du processeur 23 à l'étape E12.

L'application AP peut ainsi être exécutée par le processeur 21 (après confirmation éventuelle de l'utilisateur via l'écran tactile 21) et provoque à l'étape E13, du fait de son exécution, l'affichage sur l'écran tactile 21 d'un message demandant à l'utilisateur de placer la carte à microcircuit 10 à proximité du téléphone mobile 20 afin d'établir à l'étape E14 une liaison sans fil courte portée entre le téléphone mobile 20 et la carte à microcircuit 10 comme expliqué plus haut.

Le processeur 23 du téléphone mobile 20 peut ainsi émettre à l'étape 15, via cette liaison sans fil courte portée, une commande d'acquisition (ou commande de prise d'empreinte) CMD, accompagnée de la donnée d'authentification AUTH, à destination du microcontrôleur 13 de la carte à microcircuit 10.

Dans l'exemple décrit ici, la donnée d'authentification AUTH a été reçue au préalable du serveur 50 comme indiqué ci-dessus (étapes E10 et E12). En variante, la donnée d'authentification AUTH peut être reçue via le circuit d'interface 24, par exemple par présentation d'une étiquette NFC à proximité du circuit d'interface 24 ou par présentation du circuit d'interface 24 à proximité d'un lecteur dédié (le circuit d'interface 24 fonctionnant alors en mode émulation de carte). Dans les deux cas, une étape préalable d'authentification du téléphone mobile 20 auprès de l'étiquette NFC ou du lecteur est prévue avant transmission de la donnée d'authentification AUTH par l'étiquette NFC ou le lecteur au téléphone mobile 20. L'application AP pourrait également être transmise au téléphone mobile 20 à cette occasion.

Selon une autre variante envisageable, la donnée d'authentification AUTH pourrait être un code (par exemple de type code PIN pour "*Personal Identification Number*") saisi par l'utilisateur sur l'écran tactile 21 en réponse à une question affichée à cet effet sur l'écran tactile 21, par exemple du fait de l'exécution de l'application AP reçue du serveur 50.

La carte à microcircuit 10 reçoit à l'étape E16 la commande d'acquisition CMD et la donnée d'authentification AUTH, puis vérifie à l'étape E18 que la donnée d'authentification AUTH reçue correspond bien à la donnée d'authentification attendue, par exemple en lisant la donnée d'authentification attendue dans la mémoire non-volatile réinscriptible du microcontrôleur 13 et en comparant la donnée lue et la donnée reçue à l'étape E16.

Si le microcontrôleur 13 détermine à l'étape E18 que la donnée d'authentification AUTH reçue ne correspond pas à la donnée d'authentification attendue, le microcontrôleur 13 émet un message d'erreur ERR à destination du processeur 23 du téléphone mobile 20, via la liaison sans fil courte portée, et met fin à la session d'échange sans utiliser le capteur d'empreinte digitale 14 (mais en incrémentant éventuellement un compteur d'erreur mémorisé dans la mémoire non-volatile réinscriptible du microcontrôleur 13, ce qui peut conduire au blocage du fonctionnement de la carte à microcircuit 10 par écriture de données de blocage - parfois dénommées "*verrou*" - dans la mémoire non-volatile réinscriptible du microcontrôleur 13 si le compteur d'erreur atteint un seuil prédéterminé).

Ainsi, seul un utilisateur capable de présenter les données d'authentification AUTH peut effectuer la prise d'empreinte décrite ci-dessous.

Le téléphone mobile 20 reçoit le message d'erreur ERR à l'étape E20 et affiche éventuellement une indication d'erreur à destination de l'utilisateur sur l'écran tactile 21.

Si le microcontrôleur 13 détermine à l'étape E18 que la donnée d'authentification AUTH reçue correspond à la donnée attendue, le procédé se poursuit à l'étape E22 à laquelle le microcontrôleur 13 émet un message de bon fonctionnement OK à destination du processeur 23 du téléphone mobile 20.

À réception de ce message de bon fonctionnement OK, le processeur 23 du téléphone mobile 20 commande à l'étape E24 la génération d'une indication invitant l'utilisateur à passer son doigt sur le capteur d'empreinte digitale 21, par exemple en pratique l'affichage sur l'écran tactile 21 d'un message demandant à l'utilisateur de passer un doigt sur le capteur d'empreinte digitale 14 (ou en variante l'émission d'un message vocal dans ce même but). Selon les cas, il peut s'agir d'un doigt prédéfini (par exemple l'index gauche) ou d'un doigt choisi par l'utilisateur, qu'il devra à nouveau présenter lors de l'utilisation de la carte à microcircuit 10 (voir ci-dessous les étapes E36 à E42). Dans les variantes envisagées ci-dessus (reconnaissance faciale ou d'iris), l'indication invite l'utilisateur à présenter la partie concernée de son corps (par exemple son visage ou son oeil dans les variantes envisagées) devant le capteur de données biométriques.

Par ailleurs, rapidement (voire immédiatement) après envoi du message de bon fonctionnement OK (étape E22), le microcontrôleur 23 commande à l'étape E25 l'activation du capteur d'empreinte digitale 26. Le capteur d'empreinte digitale 26 est alors prêt pour la prise d'empreinte.

Lorsque l'utilisateur passe son doigt devant le capteur d'empreinte digitale 14 (comme il y a été incité par le message affiché sur l'écran tactile 21 à l'étape E24), le capteur d'empreinte digitale 14 détecte le doigt et génère une image de l'empreinte de ce doigt (empreinte digitale) à l'étape E26.

Selon une possibilité de réalisation, plusieurs passages du doigt devant le capteur d'empreinte digitale 14 sont nécessaires pour obtenir une image de l'ensemble de l'empreinte digitale, comme décrit par exemple dans le document WO 2014/068 090. Le microcontrôleur 13 envoie dans ce cas, pour chaque passage requis du doigt devant le capteur d'empreinte digitale 14, un nouveau message au processeur 23 via la liaison sans fil courte portée afin que le processeur 23 commande l'affichage sur l'écran tactile 21 d'un message invitant l'utilisateur à positionner à nouveau son doigt sur le capteur d'empreinte digitale 14, en précisant éventuellement quelle région du doigt l'utilisateur doit positionner sur le capteur 14 à l'itération concernée.

Une fois l'image de l'empreinte digitale capturée, le microcontrôleur 13 peut analyser à l'étape E28 l'image de l'empreinte digitale afin d'en déduire des données biométriques, ici des caractéristiques représentatives de cette empreinte, par exemple un ensemble de minuties.

Selon une possibilité de réalisation, après toute acquisition (étape E26) et/ou toute analyse (étape E28), le microcontrôleur 13 peut envoyer au processeur 23 des informations relatives à la qualité de la prise d'empreinte et/ou aux différentes zones acquises lors de passages successifs (lorsque plusieurs passages du doigt sont nécessaires comme indiqué ci-dessus), ainsi qu'au recouvrement de ces zones ; le processeur 23 peut alors commander l'affichage sur l'écran tactile 21 de ces informations relatives à la qualité et/ou aux zones acquises et à leur recouvrement pour en informer l'utilisateur.

Les données biométriques obtenues (ici les caractéristiques représentatives obtenues) sont mémorisées dans la mémoire non-volatile réinscriptible du microcontrôleur 13 à l'étape E30.

Le microcontrôleur 13 émet alors à l'étape E32 un message TERM signalant la fin du processus de prise d'empreinte, à destination du processeur 23 du téléphone mobile 20 et via la liaison sans fil courte portée.

On peut alors prévoir une étape (non représentée) d'activation de la carte à microcircuit 10 qui permet d'autoriser le microcontrôleur 13 à mettre en oeuvre des commandes (par exemple des commandes utilisant une clé cryptographique et/ou une commande de signature et/ou une commande de chiffrement) qui n'étaient pas autorisées avant cette étape d'activation.

Le message de fin de processus TERM est reçu par le processeur 23 à l'étape E34 ; le processeur 23 commande alors par exemple l'affichage sur l'écran tactile 21 d'une indication destinée à l'utilisateur et signifiant que le processus de prise d'empreinte s'est déroulé correctement jusqu'à son terme.

L'utilisateur peut dès lors utiliser la carte à microcircuit 10 pour l'application à laquelle elle est destinée, en présentant son doigt devant le capteur d'empreinte digitale 14 pour autoriser la carte à microcircuit 10 à effectuer la fonctionnalité pour laquelle elle est conçue, par exemple chiffrer ou signer un message, ou encore envoyer à un dispositif tiers une donnée permettant d'attester qu'une clé cryptographique est mémorisée dans la carte à microcircuit 10 (typiquement une donnée obtenue par combinaison de la clé cryptographique et d'un défi, ou "*challenge*", reçu du dispositif tiers).

Le procédé d'utilisation de la carte à microcircuit 10 comprend ainsi par exemple les étapes suivantes, ici dans le cas où la carte à microcircuit 10 est placée à proximité d'un lecteur (non représenté) qui télé-alimente la carte à microcircuit 10.

Le capteur d'empreinte digitale 14 est activé dès la mise sous tension de la carte à microcircuit 10 par télé-alimentation et peut ainsi détecter l'empreinte digitale à l'étape E36 et générer une image de cette empreinte digitale.

L'image obtenue à l'étape E36 est analysée par le microcontrôleur 13 à l'étape E37 afin d'obtenir de nouvelles données biométriques (ici des caractéristiques représentatives de l'empreinte digitale), selon un processus d'analyse identique à celui utilisé à l'étape E28 décrite plus haut.

Le microcontrôleur 13 peut ainsi comparer (étape E38) les caractéristiques représentatives obtenues à l'étape E37 à celles mémorisées dans la mémoire non-volatile réinscriptible du microcontrôleur 13 à l'étape E30 et, si un nombre suffisant (c'est-à-dire supérieur à un seuil prédéterminé) de caractéristiques coïncident, procéder à l'étape E42 à la mise en oeuvre de la fonctionnalité pour laquelle la carte à microcircuit 10 est conçue, comme expliqué plus bas.

En revanche, dans la négative (c'est-à-dire si le nombre de caractéristiques communes entre celles obtenues à l'étape E37 et celles mémorisées à l'étape E30 est inférieur au seuil prédéterminé), la fonctionnalité précitée n'est pas mise en oeuvre et un traitement de l'anomalie est effectué. Ce traitement comprend par exemple l'incrémentation d'un compteur d'erreur mémorisé dans la mémoire non-volatile réinscriptible du microcontrôleur 13 et le blocage du fonctionnement de la carte à microcircuit 10 par écriture de données de blocage dans la mémoire non-volatile réinscriptible du microcontrôleur 13 lorsque le compteur d'erreur atteint une valeur prédéterminée.

Lorsque le test de l'étape E38 décrite ci-dessus est positif, c'est-à-dire que la personne qui présente son empreinte digitale à l'étape E36 est bien la personne qui a enregistré son empreinte digitale au moyen du processus de prise d'empreinte décrit plus haut, la carte à microcircuit effectue comme déjà indiqué à l'étape E42 la fonctionnalité pour laquelle elle est conçue, fonctionnalité qui comprend par exemple l'application à un message reçu d'un algorithme cryptographique utilisant une clé cryptographique (secrète) mémorisée dans la mémoire non-volatile réinscriptible du microcontrôleur 13.

Selon une possibilité de réalisation, cette fonctionnalité comprend le chiffrement d'un message reçu du lecteur (à proximité duquel la carte à microcircuit 10 est placée lors de son utilisation comme expliqué ci-dessus) par application au message reçu d'un algorithme cryptographique de chiffrement utilisant une clé secrète (par exemple une clé privée) mémorisée dans la mémoire non-volatile réinscriptible du microcontrôleur 13 et à renvoyer le message chiffré au lecteur.

Selon une autre possibilité de réalisation, cette fonctionnalité comprend la signature d'un message reçu du lecteur par application d'un algorithme cryptographique de signature utilisant une clé secrète (par exemple une clé privée) mémorisée dans la mémoire non-volatile réinscriptible du microcontrôleur 13 et à renvoyer la signature obtenue au lecteur

Selon encore une autre possibilité de réalisation, cette fonctionnalité comprend le traitement d'un défi reçu du lecteur au moyen d'un algorithme cryptographique utilisant une clé secrète mémorisée dans la mémoire non-volatile réinscriptible du microcontrôleur 13.

La fonctionnalité peut également comprendre la lecture de données ou d'un fichier dans une mémoire du microcontrôleur 13 et son émission à destination du lecteur.

## Revendications

1. Procédé de prise de données biométriques par un module sécurisé portable (10) présentant un capteur de données biométriques (14), **caractérisé en ce qu'**il comprend les étapes suivantes :
- génération (E13), par une interface homme-machine (21) d'un appareil électronique (20), d'une indication destinée à un utilisateur ;
- échange (E15, E16), via une interface de communication sans fil (11, 12, 24, 27) entre l'appareil électronique (20) et le module sécurisé portable (10), d'informations (CMD) relatives à l'initiation d'un processus de prise de données biométriques ;
- détermination (E26, E28) de données biométriques de l'utilisateur au moyen du capteur (14) ;
- mémorisation (E30) des données biométriques déterminées dans le module sécurisé portable (10).

2. Procédé selon la revendication 1, dans lequel l'étape d'échange comprend une étape de transmission (E15), via l'interface de communication sans fil (11, 12, 24, 27), d'une commande d'acquisition (CMD) émise par l'appareil électronique (20) et destinée au module sécurisé portable (10).

3. Procédé selon la revendication 1 ou 2, dans lequel la mise en oeuvre de l'étape de détermination (E26, E28) ou de l'étape de mémorisation (E30) est conditionnée par la réception d'une donnée d'authentification (AUTH) par le module sécurisé portable, via l'interface de communication sans fil (11, 12, 24, 27) et en provenance de l'appareil électronique (20).

4. Procédé selon la revendication 3, comprenant une étape préalable de réception (E12) de la donnée d'authentification (AUTH) par l'appareil électronique (20) en provenance d'un serveur distant (50).

5. Procédé selon la revendication 4, dans lequel une application (AP) exécutable au sein de l'appareil électronique (20) pour mettre en oeuvre les étapes de génération (E13) de l'indication et d'échange (E15) via l'interface de communication sans fil est reçue du serveur distant (50).

6. Procédé selon la revendication 4 ou 5, dans lequel l'appareil électronique (20) comprend un module (22) de communication dans un réseau de téléphone mobile et dans lequel une connexion de l'appareil électronique (20) au serveur distant (50) est établie au moyen dudit module de communication (22).

7. Procédé selon l'une des revendications 4 à 6, comprenant, antérieurement à l'étape de réception (E12) de la donnée d'authentification (AUTH) par l'appareil électronique (20), une étape d'authentification (E2) auprès du serveur distant (50) mise en oeuvre par l'appareil électronique (20).

8. Procédé selon l'une des revendications 1 à 7, dans lequel l'interface homme-machine comprend un écran (21) et dans lequel l'indication destinée à l'utilisateur est affichée sur l'écran (21).

9. Procédé selon l'une des revendications 1 à 8, dans lequel le capteur de données biométriques est un capteur d'empreinte digitale et dans lequel les données biométriques sont des caractéristiques représentatives d'une empreinte digitale de l'utilisateur.

10. Procédé selon l'une des revendications 1 à 9, dans lequel l'interface de communication sans fil (11, 12, 24, 27) a une portée inférieure à 50 cm.

11. Procédé selon l'une des revendications 1 à 10, dans lequel l'étape de mémorisation (E30) est effectuée dans une mémoire non-volatile réinscriptible du module sécurisé portable (10).

12. Procédé selon l'une des revendications 1 à 11, comprenant les étapes ultérieures suivantes :
- obtention (E36, E37) de nouvelles données biométriques au moyen du capteur (14) ;
- comparaison (E38) des données biométriques obtenues et des données biométriques mémorisées.

13. Procédé selon la revendication 12, comprenant une étape (E42) de mise en oeuvre, par le module sécurisé portable, d'un algorithme cryptographique utilisant une clé mémorisée dans le module sécurisé portable (10) lorsque l'étape de comparaison (E38) a un résultat positif.

14. Procédé selon la revendication 12, comprenant une étape (E42) de lecture de données mémorisées dans le module sécurisé portable (10) lorsque l'étape de comparaison (E38) a un résultat positif.

15. Procédé selon l'une des revendications 1 à 14, dans lequel l'appareil électronique est un téléphone mobile (20).

16. Procédé selon l'une des revendications 1 à 15, dans lequel le module sécurisé portable est une carte à microcircuit (10).
